# EUROPEAN PATENT APPLICATION

(11) **EP 2 388 452 A1**
(43) Date of publication of application: **23.11.2011**
(21) Application number: 10163458.2
(22) Date of filing: 20.05.2010
(51) Int. Cl.: F01N 3/20

(54) **Reagent dosing device**

(71) Applicant: Delphi Technologies Holding S.à.r.l., 4940 Bascharage (LU)
(72) Inventor: Hardy, Martin, Gillingham, Kent ME7 3QZ (GB); Panteny, Simon, Gillingham, Kent ME7 2QE (GB)
(74) Representative: Gregory, John David Charles

(57) **Abstract**

A fluid dosing device for introducing a reagent into an exhaust gas flow in a selective catalytic reduction system is described. The dosing device comprises an injection nozzle (26) having an outlet end (30) from which the reagent is injectable into the gas flow (38), and a heat shield (240) disposed around the outlet end (30) of the injection nozzle (26) and arranged to shield the outlet end (30) from the exhaust gas flow (26), in use. The heat shield (240) comprises an outlet aperture (244) through which the reagent can pass into the gas flow (38) during injection of the reagent. According to the invention, the heat shield (240) further comprises gas flow modifying means (250) arranged to guard against deposition of the reagent between the injection nozzle (26) and the heat shield (240), thereby reducing the likelihood of thermal bridging between the heat shield and the injection nozzle.

## Description

### Field of the invention

The present invention relates to a device for dosing a gas flow with a fluid. In particular, the invention relates to a device for effecting optimum dispersion and mixing of a reagent in a flow of exhaust gases in order to reduce harmful exhaust gas emissions.

### Background to the invention

One strategy for reducing nitrogen oxide exhaust gas emissions in an internal combustion engine involves the introduction of a reagent comprising a reducing agent, typically a liquid ammonia source such as an aqueous urea solution, into the exhaust gas stream. This method is known as selective catalytic reduction or SCR. The reducing agent is injected into the exhaust gas upstream of an exhaust gas catalyst, known as an SCR catalyst. Nitrogen oxides in the exhaust gas undergo a catalysed reduction reaction with the ammonia source on the SCR catalyst, forming gaseous nitrogen and water.

Typically, in a selective catalytic reduction (SCR) system, injection of the reagent into the exhaust gas stream is achieved by pumping the reagent from a supply tank to an injection nozzle disposed within the exhaust gas stream using a suitable pump, such as the pump described in the present applicant's co-pending European Patent Application Publication No. EP-A-1878920. By suitable control of the pump, a desired quantity of reagent can be dosed into the exhaust gas stream through an outlet end of the injection nozzle.

For maximum catalytic efficiency, it is desirable that the reducing agent is atomised as it is injected from the injection nozzle. In this way, the reducing agent leaves the injection nozzle in the form of a finely-divided spray, which becomes thoroughly mixed with the exhaust gas stream. Accordingly, the outlet end of the injection nozzle may be arranged so as to cause atomisation of the reagent during dosing.

To improve further the mixing of the reagent with the exhaust gas stream, the outlet end of the injection nozzle is preferably located within the exhaust gas stream itself. In such an arrangement, the outlet end of the injection nozzle is exposed to the high-temperature exhaust gas stream, with the result that the temperature of the injection nozzle tends to increase. Such heating of the injection nozzle can be undesirable, since the reagent is vulnerable to overheating and boiling. In particular, boiling of the reagent can result in the formation of crystalline deposits, which can result in blockage of the injection nozzle and poor performance of the SCR system.

Accordingly, reagent dosing devices often incorporate means for insulating the reagent in the injection nozzle from the hot exhaust gases and from heat-conducting parts of the exhaust system, such as exhaust pipes. For example, some dosing devices are arranged to re-circulate reagent between the injection nozzle and the reagent supply tank. In this case, the re-circulation helps to carry heat away from the nozzle via the reagent. Air-assisted dosing devices are also known, in which a compressed air source is fed through the injection nozzle to aid atomisation of the reagent. In this case, the flow of air through the injection nozzle also helps to cool the reagent. The injection nozzle may include an insulating jacket, for example in the form of an evacuated compartment, to space the reagent-carrying passages from the exterior of the nozzle.

Another strategy for preventing overheating of the reagent involves providing a heat shield arrangement around the injection nozzle, for example in the form of a tubular sleeve or a tubular exhaust port that extends to surround the outlet end of the injection nozzle, whilst leaving an air gap between the outer surface of the injection nozzle and the inner surface of the heat shield. The heat shield helps to deflect the exhaust gas flow around the injection nozzle, so as to reduce the heating effect of the hot exhaust gases.

### Summary of the invention

The inventors of the present invention have recognised that, in such heat shield arrangements, there is a risk that, as reagent is sprayed from the injection nozzle, solid deposits of crystalline reagent matter could build up on the inside of the heat shield. If such deposits were to bridge the air gap between the injection nozzle and the heat shield, a path for thermal conduction could be created that could cause undesirable heating of the injection nozzle.

The inventors have therefore appreciated that it would be desirable to provide a reagent dosing device having a heat shield arrangement in which the likelihood of deposition of reagent solids on the heat shield or the injection nozzle, and in particular between the heat shield and the injection nozzle, is reduced or eliminated.

Accordingly, from a first aspect, the present invention resides in a fluid dosing device for introducing a reagent into an exhaust gas flow in a selective catalytic reduction system. The dosing device comprises an injection nozzle comprising an outlet end from which the reagent is injectable into the gas flow, and a heat shield disposed around the outlet end of the injection nozzle and arranged to shield the outlet end from the exhaust gas flow, in use, wherein the heat shield comprises an outlet aperture through which the reagent can pass into the gas flow during injection of the reagent. According to the invention, the heat shield further comprises gas flow modifying means arranged to guard against deposition of the reagent between the injection nozzle and the heat shield. For example, the gas flow modifying means may be arranged to prevent deposition of the reagent on the injection nozzle, on the heat shield, or on both components.

The gas flow modifying means alters the flow pattern of the exhaust gases as they flow past the outlet end of the injection nozzle. By altering the flow pattern of the exhaust gases in this way, the tendency for reagent deposits to build up in the region of the outlet end can be reduced, compared to what would otherwise occur in the absence of gas flow modifying means. The gas flow modifying means may, for example, create turbulence or other flow effects around the outlet end of the injection nozzle. In one example, the gas flow modifying means reduces or eliminates Helmholtz resonance and/or Venturi effects in the region of the outlet aperture of the heat shield.

In one embodiment of the invention, the gas flow modifying means is arranged to allow a portion of the exhaust gas stream to flow through the heat shield. Allowing a portion of the exhaust gas stream to flow through the heat shield might be expected to decrease the performance of the dosing device, by reducing the effectiveness of the heat shield at deflecting exhaust gases away from the injection nozzle. Surprisingly, however, the overall effect of allowing a portion of the exhaust gas stream to flow through the heat shield in accordance with this embodiment of the invention is to improve the performance of the dosing device, since this arrangement guards against deposition of reagent material whilst still deflecting a significant amount of the exhaust gas stream.

The gas flow modifying means may comprise one or more apertures in the heat shield. For example, the apertures may comprise circular holes or elongate slots. The apertures may be parallel-sided, or may be conical, tapered or otherwise shaped.

In another example, the gas flow modifying means comprises a mesh, and the apertures comprise openings of the mesh.

Alternatively, or in addition to one or more apertures, the gas flow modifying means may comprise control surfaces, flanges, baffles, vanes, ridges or dimples in or on the heat shield.

In another embodiment of the invention, the gas flow modifying means comprises one or more recesses and/or one or more projections of the heat shield peripheral to the outlet aperture.

The heat shield of the dosing device may comprise a tubular sleeve. In this case, the outlet aperture of the heat shield may comprise a downstream end of the sleeve.

The outlet aperture of the heat shield is optionally positioned downstream of the outlet end of the injection nozzle. The heat shield may be spaced from the injection nozzle so as to define an air gap therebetween.

In a preferred embodiment of the invention, the injection nozzle comprises a nozzle body and an insulating jacket surrounding the nozzle body. The insulating jacket preferably defines a compartment in the injection nozzle. The compartment may be substantially evacuated, so as to insulate the nozzle body from the surrounding environment.

The heat shield of the dosing device according to the invention may be a separate component, or may be part of the dosing device or an exhaust pipe in which the dosing device is mounted, in use. Accordingly, in a second aspect of the invention, there is provided a heat shield for a fluid dosing device according to the first aspect of the invention, the heat shield comprising an outlet aperture and gas flow modifying means.

The present invention also extends, in a third aspect, to an exhaust pipe for an internal combustion engine, comprising a port for receiving a fluid dosing device, the port comprising a heat shield according to the second aspect of the invention.

### Brief description of the drawings

Preferred embodiments of the present invention will now be described, by way of example only, with reference to the accompanying drawings in which like reference numerals are used for like features, and in which:
Figure 1 is a part cross-sectional view of a fluid dosing device of a type suitable for modification so as to embody the present invention;
Figure 2 is a part cross-sectional view showing part of an injection nozzle and a heat shield of another fluid dosing device suitable for modification so as to embody the present invention;
Figure 3(a) is a cross-sectional view of part of a heat shield of a dosing device according to one embodiment of the present invention, and Figure 3(b) is a part-cross sectional view of part of one embodiment of a dosing device according to the invention, incorporating the heat shield of Figure 3(a);
Figures 4(a) and 4(b) are part cross-sectional views showing variants of the dosing device of Figure 3(b);
Figures 5(a), 5(b), 5(c), 5(d) and 5(e) are cross-sectional views of parts of heat shields of dosing devices according to further embodiments of the present invention;
Figures 6(a) and 6(b) are cross-sectional views of parts of heat shields of dosing devices according to still further embodiments of the present invention;
Figure 7 is a part cross-sectional view of part of a dosing device according to yet another embodiment of the present invention; and
Figure 8 is a part cross-sectional view of part a dosing device according to still another embodiment of the present invention.

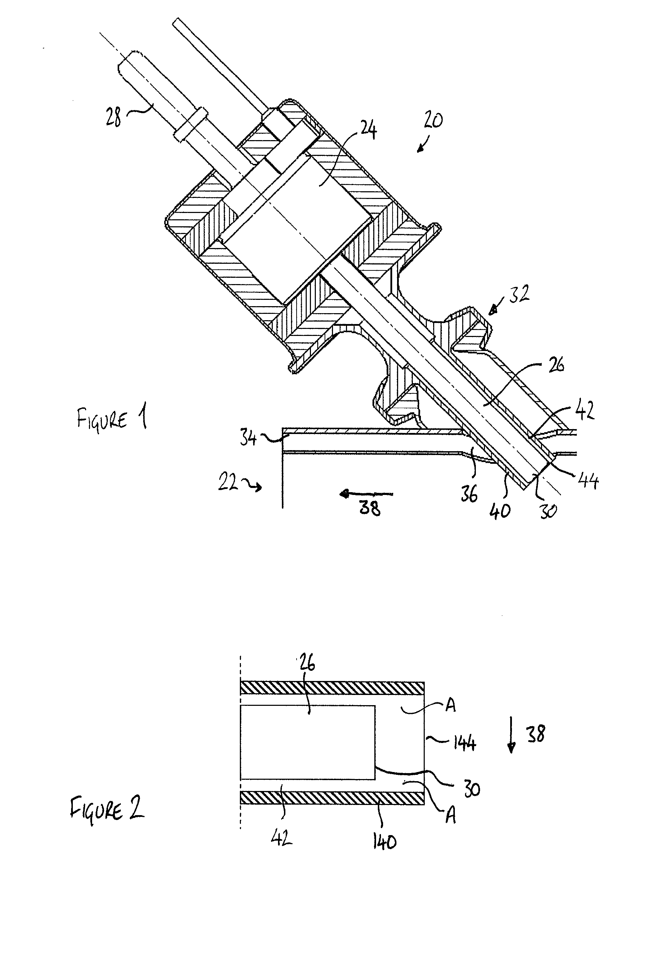

Throughout this description, the terms 'upstream' and 'downstream' refer to directions relative to the general flow direction of reagent through and out of the fluid dosing device during normal use. In Figures 2 to 8, for example, the upstream direction is to the left, and the downstream direction is to the right.

### Detailed description of preferred embodiments of the invention

Figure 1 shows a dosing device 20 mounted in an exhaust pipe 22 of an internal combustion engine (not shown). The dosing device 20 comprises a pump body 24 and an injection nozzle 26. The pump body 26 houses a metering dosing pump and is arranged to pump reagent from an inlet 28 into the injection nozzle 26. The injection nozzle 26 comprises a delivery tube (not shown) that is surrounded by a jacket (not shown). The jacket defines a compartment around the delivery tube, and the compartment is substantially evacuated so as to thermally insulate the delivery tube, as is described in, for example, EP-A-1878920.

An outlet end 30 of the injection nozzle 26 houses a valve arrangement (not shown). When the dosing pump is operated, reagent is forced at high pressure along the delivery tube, causing the valve arrangement to open. The valve arrangement and outlet end 30 of the injection nozzle 26 are arranged so that, when the reagent is expelled through the outlet end 30, the liquid becomes atomised and leaves the dosing device in a finely-divided spray.

In use, the dosing device 20 is mounted, by way of a suitable mounting arrangement 32, to a wall 34 of the exhaust pipe 22. The injection nozzle 26 extends through an aperture or port 36 in the wall 34, so that the outlet end 30 of the injection nozzle 26 is positioned within the exhaust pipe 22. The exhaust pipe 22 conveys an exhaust gas stream (indicated by arrow 38) and, when reagent is expelled from the outlet end 30 of the injection nozzle 26, the reagent sprays directly into the exhaust gas stream 38 so as to mix thoroughly with the exhaust gases.

A heat shield, comprising a tubular heat shield sleeve 40, surrounds a portion of the injection nozzle 26 that extends from the mounting arrangement 32 to the outlet end 30. In this example, the heat shield sleeve 40 is formed integrally with a component of the mounting arrangement 32, although it will be appreciated that the heat shield sleeve 40 could be a separate component or a part of the exhaust pipe 34.

The sleeve 40 is spaced from the injection nozzle 26, so as to define an air gap 42 between the sleeve 40 and the injection nozzle 26. An open end of the sleeve 40 forms an outlet aperture 44 of the sleeve 40. In use, reagent expelled from the outlet end 30 of the injection nozzle 26 passes through the outlet aperture 44 of the sleeve 40 in order to reach the exhaust gas stream 38. In this dosing device 20, the outlet aperture 44 of the sleeve 40 is aligned with the outlet end 30 of the injection nozzle 26.

Figure 2 shows, in part, a variant of the dosing device of Figure 1, in which the heat shield sleeve 140 extends beyond the outlet end 30 of the injection nozzle 26 in a downstream direction. Said another way, the outlet aperture 144 of the sleeve 140 is positioned downstream of the outlet end 30 of the injection nozzle 26, such that the outlet end 30 of the injection nozzle 26 is recessed in the heat shield sleeve 140.

The inventors of the present invention have discovered that, as the exhaust gas stream 38 flows past the outlet aperture 144 of the sleeve 140, gas pressure disturbances can arise in the region of the outlet end 30 of the injection nozzle 26, as a result of eddy currents and other turbulence.

For example, in the regions labelled 'A' in Figure 2, localised reductions in pressure can occur due to the effect of the exhaust gas stream 38 blowing over the outlet aperture 144 of the sleeve 140. Also, Helmholtz resonance can occur, resulting in pressure waves being set up within the sleeve 140. It will be appreciated that the nature and extent of such pressure disturbances will depend on a large number of factors, including the geometry of the sleeve 140, the injection nozzle 26 and the exhaust pipe, the respective positions of these components, the angle at which the injection nozzle 26 is oriented with respect to the exhaust pipe, the velocity of the exhaust gas stream 38 and so on.

The pressure disturbances near the outlet end 30 of the injection nozzle 26 influence the spray pattern of reagent as it is ejected from the outlet end 30. In some circumstances, the reagent spray is influenced in such a way that a portion of the reagent is deflected towards the inside of the sleeve 140. In extreme cases, a portion of the reagent may even be deflected back towards the injection nozzle 26.

Such deflection of the reagent is undesirable for two reasons. Firstly, when an atomised reagent spray hits a surface such as the inside of the sleeve 140 or a surface of the injection nozzle 26, the finely-divided nature of the spray is lost. Even if the reagent then enters the exhaust gas stream 38, the ability of the reagent to mix with the exhaust gases is substantially reduced. Secondly, when the surfaces of the injection nozzle 26 or, particularly, the sleeve 140 are hot, the reagent rapidly overheats. This can cause buildup of crystalline reagent deposits in the region of the outlet end 30, on the sleeve 140 and on the injection nozzle 26.

If such deposits build up, they can bridge the air gap 42 between the heat shield 140 and the injection nozzle 26, causing thermal bridging across the gap 42. In other words, the deposits can provide a path for heat conduction across the gap 42. In these circumstances, the temperature of the injection nozzle 26 can increase to an unacceptable level, which can lead to overheating of the reagent in the injection nozzle 26 itself.

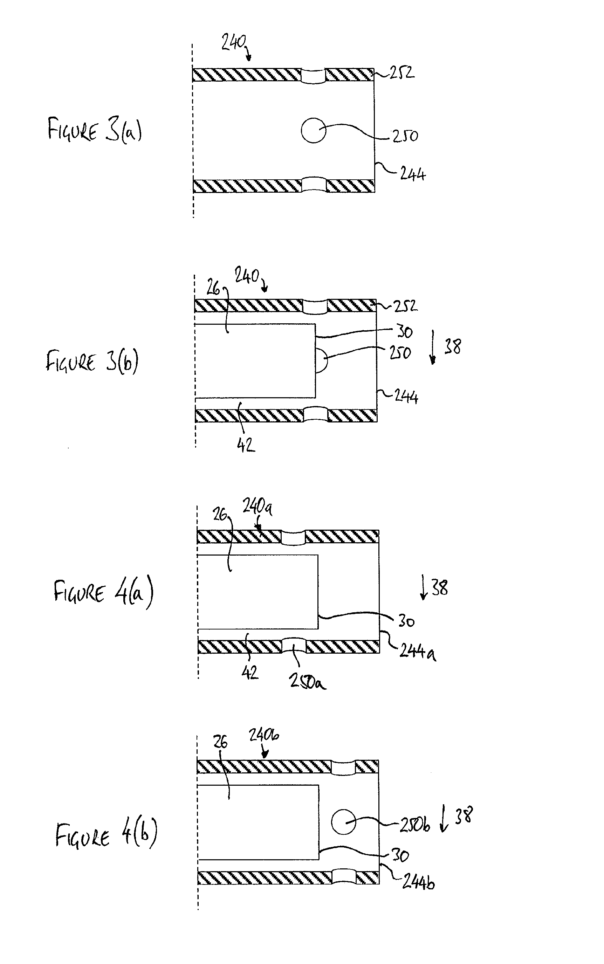

Figure 3 shows, in part, a heat shield sleeve 240 according to the present invention that addresses this problem. The heat shield sleeve 240 includes gas flow modifying means in the form of a ring of circular apertures or holes 250 that extend through the wall 252 of the sleeve 240. In this embodiment, four holes 250 are provided in the sleeve 240, arranged at 90° to one another. The holes 250 are spaced from the outlet aperture 244 of the sleeve.

The heat shield sleeve 240 of Figure 3(a) can be used in place of the heat shield sleeve 140 of the dosing device shown, in part, in Figure 2. Figure 3(b) shows part of a dosing device having such an arrangement. The heat shield sleeve 240 is arranged so that the holes 250 are approximately aligned, in a radial direction, with the outlet end 30 of the injection nozzle 26.

In use, the exhaust gas stream 38 is substantially deflected away from the injection nozzle 26 by the sleeve 240. However, the holes 250 allow a portion of the gas stream 38 to flow through the wall 252 of the sleeve 240, into the interior of the sleeve 240 close to the outlet end 30 of the injection nozzle 26 and into the air gap 42. Similarly, gases can flow through the holes 250 out of the gap 42 and the interior of the sleeve 240.

In this way, the holes 250 modify the gas flow in the region of the outlet end 30 of the injection nozzle 26, compared to the gas flow that would occur if the holes 250 were absent. By virtue of the holes 250, therefore, disturbances in the gas pressure that would otherwise undesirably influence the reagent spray pattern can be reduced or eliminated. It will be appreciated by a person skilled in the art that the arrangement of the holes 250 in the heat shield of Figures 3(a) and 3(b) can be modified as appropriate, according to the configuration of the dosing device and the exhaust gas system, in order to reduce or eliminate deposits in the region of the injection nozzle 26.

One variable that can be selected in order to optimise the performance of the heat shield is the position of the holes or other gas flow modifying means, relative to the position of the outlet end 30 of the injection nozzle 26.

For example, Figure 4(a) shows a variant of the heat shield of Figures 3(a) and 3(b), positioned on the injection nozzle 26 of a corresponding dosing device. In this case, the holes 250a in the heat shield sleeve 240a are positioned further away from the outlet aperture 244a of the sleeve 240a than in the heat shield 240 of Figures 3(a) and 3(b). Therefore, in this case, the holes 250a are positioned upstream of the outlet end 30 of the injection nozzle 26.

Figure 4(b) shows a further variant of the heat shield of Figures 3(a) and 3(b), positioned on the injection nozzle 26 of a corresponding dosing device. Here, the holes 250b in the heat shield sleeve 240b are positioned closer to the outlet aperture 244b than in the sleeve 240 shown in Figures 3(a) and 3(b). Accordingly, in this variant, the holes 250b are positioned downstream of the outlet end 30 of the injection nozzle 26.

The number of holes provided and the arrangement of the holes in the gas flow modifying means can also be varied, and would again be selected by a person skilled in the art to optimise the performance of the heat shield for a particular application.

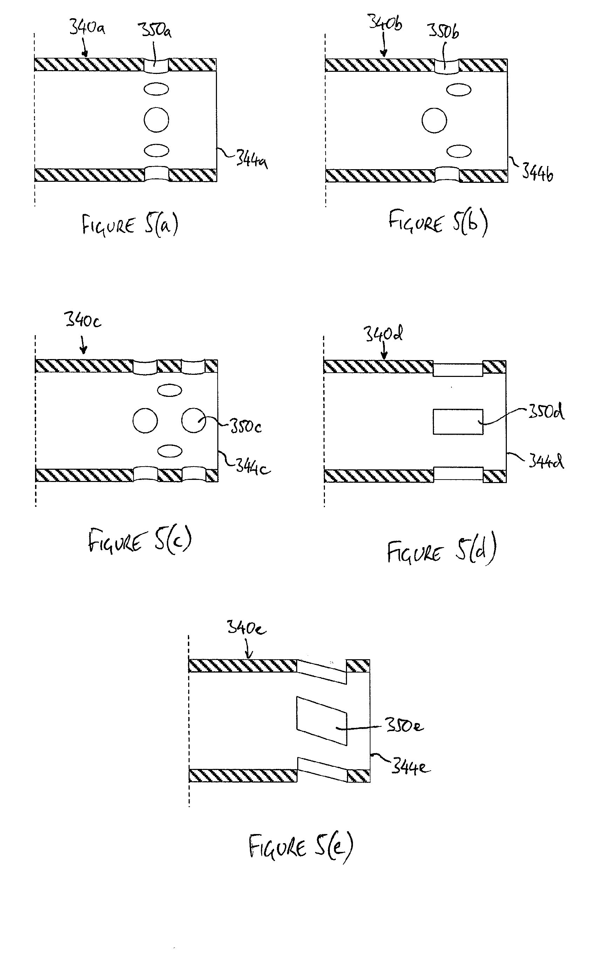

For example, Figure 5(a) shows a heat shield sleeve 340a in which the gas flow modifying means comprises a ring of eight holes 350a to allow gas to pass through the wall of the sleeve 340a. In this case, all of the holes are equidistant from the outlet aperture 344a of the sleeve 340a.

Figure 5(b) shows a heat shield sleeve 340b in which the gas flow modifying means again comprises a ring of eight holes 350b. In this case, however, the holes are positioned at varying distances from the outlet aperture 344b of the sleeve 340b.

Figure 5(c) shows a heat shield sleeve 340c in which the gas flow modifying means again comprises a set of twelve holes 350c. Four of the holes are arranged in a ring at a first distance from the outlet aperture 344c of the sleeve 340c, another four of the holes 350c are arranged in a ring at a second distance, further away from the outlet aperture 344c, and the remaining four of the holes 350c are arranged in a ring still further away from the outlet aperture 344c.

When holes or apertures in the heat shield sleeve are provided, the apertures can have any appropriate shape. For example, instead of a circular shape as described above, each aperture could be in the form of an elongate slot, or a square-shaped, diamond-shaped, elliptical, trapezoidal or otherwise shaped hole. Two or more aperture shapes could be combined in the same heat shield. The apertures could have parallel sides, for example to define cylindrical passages through the wall of the sleeve in the case of circular holes, or the apertures could be tapered so as to form frusto-conical passages in the wall. In this case, the width or diameter of the apertures could increase or decrease moving from the outer surface of the heatshield to the inner surface of the heatshield.

For example, Figure 5(d) shows a heat shield sleeve 340d in which the apertures of the gas flow modifying means comprise elongate slots 350d. In this case, the long axis of each slot 350d lies parallel to the cylinder axis of the sleeve 340d. However, the slots could be aligned in different orientations, for example at an angle to or perpendicular to the cylinder axis of the sleeve 340d.

In another example, shown in Figure 5(e), the apertures comprise parallelogram-shaped holes 350e through the wall of the sleeve 340e. Such an arrangement may be used when it is desirable to induce a swirling movement to the gas flow that passes through the sleeve 340e.

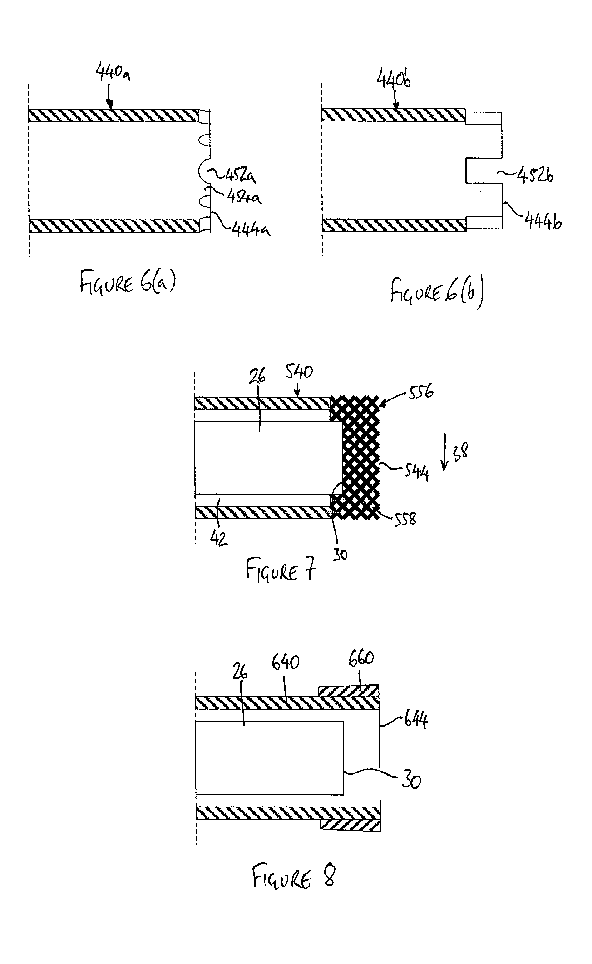

Instead of holes, the gas flow modifying means could comprise recesses and/or projections in the end of the sleeve that forms the outlet aperture of the heat shield. For example, Figure 6(a) shows a heat shield sleeve 440a in which the gas flow modifying means comprises eight semi-circular recesses or cut-outs 452a in the end of the sleeve 440a, peripheral to the outlet aperture 444a. Viewed another way, the lands 454a between the recesses 452a could be considered as projections of the sleeve 440a.

Figure 6(b) shows a similar arrangement in which a heat shield sleeve 440b is provided with four slot-like recesses 452b in the end of the sleeve 440b, peripheral to the outlet aperture 444b, to serve as the gas flow modifying means.

Other gas flow modifying means can also be contemplated. For instance, Figure 7 shows part of a dosing device in which the heat shield sleeve 540 terminates, at the outlet aperture 544, with a cylindrical mesh portion 556. The apertures 558 within the mesh portion 556 allow a portion of the exhaust gas stream 38 to circulate around the outlet end 30 of the injection nozzle 26.

In another example, shown in Figure 8, the heat shield sleeve 640 includes a plurality of radially-extending vanes 660 that project outwardly away from the outlet aperture 644. The vanes 660 are arranged to disrupt the gas flow around the sleeve 640, thereby modifying the gas flow in the region of the outlet end 30 of the injection nozzle 26.

The vanes 660 of the Figure 8 embodiment can more generally be described as an example of control surfaces. Other examples of control surfaces that can be used to modify the gas flow around and inside the heat shield include fins, flanges, baffles, ridges, and dimples. The gas flow modifying means could comprise any suitable arrangement of such features. In other embodiments, the gas flow modifying means comprises a patterned outer and/or inner surface of the heat shield sleeve, such as a dimpled surface as known in the art of golf balls. All of these features can help to reduce the problem of pressure fluctuations in the region of the outlet end of the injection nozzle contributing to deposition of solid reagent particles.

It will be appreciated that more than one type of gas flow modifying means could be provided for a given heat shield. For example, apertures could be combined with vanes, and/or with recesses and projections peripheral to the outlet aperture.

It should be noted that the relative position of the gas flow modifying means and the outlet end of the injection nozzle can be selected as described with reference to Figures 3(b) to 4(b), irrespective of the form of the gas flow modifying means. Furthermore, any of the heat shields described with reference to Figures 3(a) to 8 could also be used in place of the heat shield sleeve 40 of the dosing device 20 shown in Figure 1, in which the outlet end of the injection nozzle is substantially aligned with the outlet aperture of the heat shield. Conceivably, the outlet aperture of the heat shield could be positioned upstream of the outlet end of the injection nozzle.

Although the invention has been described with reference to a tubular heat shield sleeve, it will be understood that different types of heat shield could be comprise gas flow modifying means in accordance with the invention. The gas flow modifying means could, for example, be embodied in an aerodynamic shape of the heat shield itself. As noted previously, the heat shield may be a part of the dosing device, a part of a mounting arrangement for the dosing device, or a part of the exhaust pipe to which the dosing device is mounted, such as a port or baffle.

It will be appreciated that the examples of dosing devices, heat shields and associated gas flow modifying means described herein are merely examples, and should not be considered to limit the scope of the present invention. As will be appreciated by a person skilled in the art, many variations, modifications and alternative embodiments of the invention can be envisaged without departing from the scope of the invention as defined in the appended claims.

## Claims

1. A fluid dosing device for introducing a reagent into an exhaust gas flow in a selective catalytic reduction system, the dosing device comprising:
an injection nozzle (26) comprising an outlet end (30) from which the reagent is injectable into the gas flow (38); and
a heat shield (240) disposed around the outlet end (30) of the injection nozzle (26) and arranged to shield the outlet end (244) from the exhaust gas flow (38), in use;
wherein the heat shield (240) comprises an outlet aperture (244) through which the reagent can pass into the gas flow (38) during injection of the reagent;
and wherein the heat shield (240) further comprises gas flow modifying means (250) arranged to guard against deposition of the reagent between the injection nozzle (26) and the heat shield (240).

2. A fluid dosing device according to Claim 1, wherein the gas flow modifying means (250) is arranged to allow a portion of the exhaust gas stream (38) to flow through the heat shield (240).

3. A fluid dosing device according to Claim 2, wherein the gas flow modifying means comprises one or more apertures (250) in the heat shield (240).

4. A fluid dosing device according to Claim 3, wherein the apertures comprise circular holes (250).

5. A fluid dosing device according to Claim 3, wherein the apertures comprise elongate slots (350d; 350e).

6. A fluid dosing device according to Claim 3, wherein the gas flow modifying means comprises a mesh (556), the apertures comprising openings (558) of the mesh (556).

7. A fluid dosing device according to any preceding Claim, wherein the gas flow modifying means comprises control surfaces (660), flanges, baffles, vanes, ridges or dimples in or on the heat shield (640).

8. A fluid dosing device according to any preceding Claim, wherein the gas flow modifying means comprises one or more recesses (452a; 452b) and/or one or more projections (454a) of the heat shield (440a; 440b) peripheral to the outlet aperture (444a; 444b).

9. A fluid dosing device according to any preceding Claim, wherein the heat shield comprises a tubular sleeve (240), the outlet aperture (244) of the heat shield comprising a downstream end of the sleeve (240).

10. A fluid dosing device according to any preceding Claim, wherein the outlet aperture (244) of the heat shield (240) is positioned downstream of the outlet end (30) of the injection nozzle (26).

11. A fluid dosing device according any preceding Claim, wherein the heat shield (240) is spaced from the injection nozzle (26) so as to define an air gap (42) therebetween.

12. A fluid dosing device according to any preceding Claim, wherein the injection nozzle (26) comprises a nozzle body and an insulating jacket surrounding the nozzle body, the insulating jacket defining a compartment in the injection nozzle (26).

13. A fluid dosing device according to Claim 12, wherein the compartment is substantially evacuated.

14. A heat shield (240) for a fluid dosing device according to any preceding claim, the heat shield comprising an outlet aperture (244) and gas flow modifying means (250).

15. An exhaust pipe for an internal combustion engine, comprising a port for receiving a fluid dosing device, the port comprising a heat shield (240) according to Claim 14.
